# EUROPEAN PATENT SPECIFICATION

(11) **EP 2 878 246 B1**
(45) Date of publication and mention of the grant of the patent: **21.11.2018**
(21) Application number: 13195386.1
(22) Date of filing: 02.12.2013
(51) Int. Cl.: A47J 43/07

(54) **Tool ejecting mechanism for household appliances**
Werkzeugausgabemechanismus für Haushaltsgeräte
Mécanisme d'éjection d'outil pour appareils domestiques

(43) Date of publication of application: 03.06.2015
(73) Proprietor: BSH Hausgeräte GmbH, 81739 München (DE)
(72) Inventor: Koscak, Ales, 6230 Postojna (SI); Orbanic, Henri, 1000 Ljubljana (SI); Zilnik, Marko, 1218 Komenda (SI)

(56) References cited:
- EP-A2- 2 505 071
- WO-A1-2006/090349
- US-A- 2 605 085
- US-A- 2 639 904
- US-A- 2 847 198
- US-A1- 2009 168 594

## Description

### Background of the invention

The invention concerns a tool for a kitchen device having a shaft to be removably connected to the drive unit of the kitchen device with a user actuatable disconnecting means adapted to disconnect the tool from the drive unit of the kitchen device.

### State of the Art

Tool ejecting mechanisms for kitchen devices are already known from the State of the art.

US2098098 describes a combination in a household mixer, of a casing, a driven spindle carried on the casing, a beater having a shaft receivable in said spindle, spring means acting between the spindle and the shaft to hold the shaft in an operative driving position, a lever loosely carried on the shaft and wholly supported thereon arranged for manual tilting on the shaft to engage the shaft and another part of the mixer and thereby move the shaft longitudinally to release the beater from the spindle.

This solution describes a disengaging means for the tool of the appliance which are fitted onto the shaft of the tool in removable manner. The disengaging means need to be engaged by two fingers to result in the removal of the tool from the driving means of the appliance. The removable fixation of the disengaging means presents a problem that there is a possibility of losing the disengaging means while the tool is stored. The disconnecting means exerts force needed for the removal onto the housing of the appliance which is suboptimal in comparison to the case when the force is exerted directly onto the shaft as it can result in bending and undesired rotational forces during the disengaging of the tool. A further undesired consequence is that the disengaging means needs to be position in a very close proximity to the housing and is therefore spatially limited. As a result, the user needs to use two fingers to produce enough force for the disengagement to occur. Also, the tilting often needs to be repeated several times before the disconnecting occurs.

Document US-A-2 605 085 discloses the preamble of claim 1.

### Problem to be solved

It is the objective of the present invention to improve the convenience of handling of the processing tool of the kitchen device.

### Solution according to the invention

The objective is achieved by a tool for a motorized kitchen device for processing food according to Claim 1. Advantageous embodiments that can be implemented by themselves or in combination are described in dependent claims.

The advantage of the tool according to the invention is that the tool may be disconnected from the driving means of the kitchen device using a disconnecting means that is fixed onto the shaft of the tool which removes the danger of the disconnecting means being accidentally removed from the tool, lost of not mounted before operation.

"Removable connection to the drive unit" in sense of the invention means a normal property of the tools for kitchen devices that are usually interchangeably connected to the driving means for various types of processing such as whisking, mixing, blending, chopping, kneading, etc. The connection is tipically of a click-on type with the shaft of the tool being directly inserted into the driving means.

"User actuatable" in the sense of the invention means that the disconnecting means must be engaged directly by the user, preferably by using fingers, in order to exert the forces leading to the removal of the tool from the driving means. Preferably, the disconnecting means is tilted so as to transfer the forces from the shaft of the tool onto the housing of the kitchen device or onto the driving means directly.

A second aspect of the invention is a motorized kitchen device comprising a tool as described in claim 1 and consequent claims.

### Embodiments of the invention

In a preferred embodiment, the disconnecting means has a concave shape at least on the side adjacent to the housing of the kitchen device which results in a larger distance between the housing and the edge of the disconnecting means and in easier accessibility for the user.

According to an embodiment, the disconnecting means is mounted to the shaft in a tiltable manner in order to exert a force needed to disconnect the tool from the driving means. "Tiltable" according to this invention means that the disconnecting means is pivotable around its axis in the center where it is fixed onto the shaft of the tool. The tilting causes transfer of the force actuated by the user onto the disconnecting means in such a way that the tool is disconnected from the driving means.

"Housing" of the kitchen device according to this invention means any part of the appliance that is not removed from the appliance together with the tool when it is removed.

According to the invention, the force with which the disconnecting means is adapted to disconnect the tool from the driving means is transferred by contacting the inner portion of the disconnecting means with a slider, mounted on the shaft between the housing of the kitchen device and the disconnecting means. Thus the force that eventually separates the driving means and the tool is acting basically aligned with the axis of the shaft and is therefore reducing the torque and lowering the force needed as well as the strains on the materials.

According to an embodiment, the disconnecting means also serves as a handling means to allow the user to handle and remove the tool from the kitchen device. In this regard, it is preferred, that the diameter of the disconnecting disc is large, preferably larger than 4 cm, so that the user can handle the tool holding it only by the disconnecting means even after the tool has been disconnected from the drive unit. With such a diameter, the user may disconnect the tool and subsequently handle it using just one hand.

In a possible embodiment, it can be provided that disconnecting means is adapted so that the force needed to disconnect the tool from the driving means is lower than 25 N, preferably lower than 10 N and even more preferably lower than 5 N. This ensures that the user is easily able to disconnect the tool with a single tilt of the disconnecting means. When the force needed is lower than 10 N, or preferably lower than 5 N, the user is easily able to disconnect the tool using only one finger.

According to another embodiment, the tool is adapted so as to substantially cover the contact area between the shaft of the tool and the driving means of the kitchen device. The advantage of such a solution is that the likelihood of the processed food entering the driving means is substantially lower which transfers in less need for cleaning of the kitchen device and better durability.

In another embodiment, the disconnecting means is at least in part made of a non-metallic material, preferably rubber. Non-metallic material is generally more suitable to the touch of a user, rubber is convenient because of softness, durability and low price.

Preferably, the tool comprises a disconnecting means that is in form of a disc fixed to the axis of the tool. Such a shape is preferably used as the usage is equally effective regardless of the position in which the driving means stops. For example, a planetary gear can stop the tool in different positions in relation to the processing bowl, but the disc-shaped disconnecting means in the form is in the same relative position regardless of the stopping position of the tool. The disc according to this invention means a shape that is substantially circular and substantially centered at the point of the axis of the shaft of the tool. It can also include similar shapes such as rounded triangles, rounded squares, and other polygons, including irregular.

It is also conceivable that the disconnecting means is in form of a rod fixed to the axis of the tool that extends radially in at least two symmetrical directions to facilitate manual engagement. In some instances it may be acceptable to replace the disc-shaped disconnecting means with the rod-shaped discs. One of the advantages may be reduced material consumption. Rod in the sense of this invention means a simple rod fixed in the middle at the axis of the shaft of the tool, however it can have a round cross-section as well as any other shape. Rod should also not be viewed as limited to just two wings extending in opposite directions from the shaft, there can also be three or more wings extending in substantially symmetrical directions and they need not be of the same length.

Embodiments can be implemented by themselves or in combination are described in dependent claims.

### Brief description of the drawings

Figure1 is a depiction of the eject feature
Figure 2 shows the connection between the tool and the kitchen device.
Figure 3 shows the functioning of the eject feature

### Detailed description of the invention

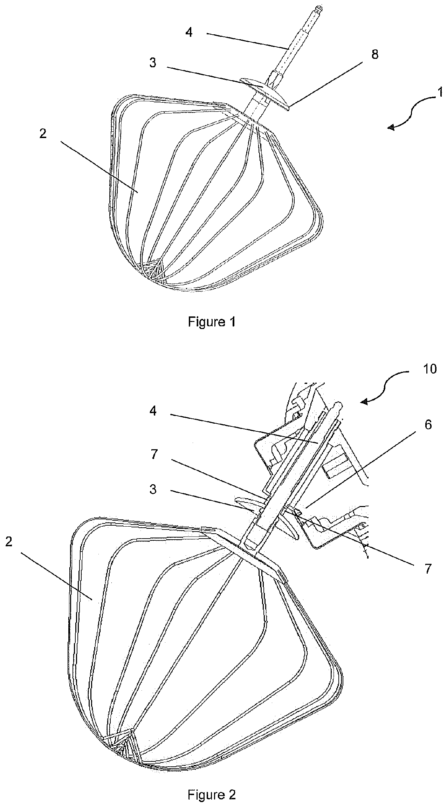

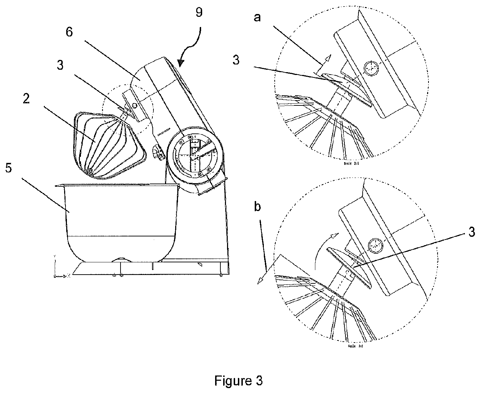

In Figure 1, a tool 1 for a kitchen device 10 with a fixedly mounted disconnecting means 3 is shown. The processing part of the tool 1, in this case a whisk 2 is unaffected by the mounting of the disconnecting means 3 which means that the disconnecting means 3 can be used on several different food processing tools without interfering with the processing function. Such food processing tools include mixing, stirring, chopping, cutting, kneading, crushing and other tools. The disconnecting means 3 is fixed onto the shaft 4 of the tool 1 in close vicinity of the entrance point of the tool 1 into the housing 6 of the kitchen device 10 (see also Figure 3). The connection between the shaft 4 and the driving means 9 is made through the clutch using a click-on or similar mechanism. The force that is generally needed to remove the tool 1 from the driving means 9 preferably does not exceed 25 N for the convenience of usage, more preferably it is lower than 10 N, even more preferably less than 5 N. The disconnecting means 3 is directly actuatable by the user, usually using a finger, to exert the necessary force for the disconnecting of the tool 1.

Housing 6 according to this invention should be understood in a broader sense as any part of the kitchen device 10 that is not part of the tool 1, therefore it remains on the kitchen device 10 when the tool 1 is disconnected.

In Figure 2, an embodiment is shown where in addition to the disconnecting means 3, a slider 7 is mounted between the disconnecting means 3 and the housing 6 of the kitchen device 10. The insertion of the slider 7
ensures that the point where the force is transferred from the disconnecting means 3 to the housing 6 of the kitchen device 10 is as close as possible to the axis of the shaft 4 of the tool 1. As the slider 7 is preferably encompassing the whole circumference of the shaft 4, the forces are distributed substantially equally around the whole shaft 4. This means that the torque is kept to the minimum and that the forces needed to disconnect the tool 1 are also lower as a result, preferably falling in the region below 5 N. As the torques are very low, the strain on the materials is also low resulting in increased durability.

In Figure 3, the disconnecting mechanism is shown in more detail. Especially when using the disconnecting tools 3 with a planetary-gear kitchen devices 10 where the shaft 4 of the tool 1 rotates at an angle in relation to the housing 6, it is preferable to have the surface of the disconnecting means 3 that is facing the housing 6 of the kitchen device 10 shaped convexly. This increases the space between the housing 6 and the edge 8 of the disconnecting means 3 when the tool 1 is mounted onto the kitchen device 10. As a result, the disconnecting tool 3 can be more easily accessed by the user using their fingers at the side that is further away from the housing 6 at that moment, while the other side of the disconnecting means 3 stays in close proximity of the housing 6. Tilting of the disconnecting means 3 results in the disconnection of the tool 1 from the driving means 9. The distance by which the disconnecting means 3 must be tilted for the removal of the tool 1 is very small, preferably not more than 5 mm. The top enlargement section in Figure 3 shows the direction **a** in which the disconnecting means 3 is tilted by the user using one finger. The disconnecting means 3 pivots around the intersection point of the plane of the disconnecting means 3 with the axis of the shaft 4 and forces the tool 1 in the direction **b** as shown in the bottom enlargement section. This results in the tool 1 being disconnected from the kitchen device 10 and allows the user to remove and handle the tool 1.

**Feature list**
- 1: Tool for a kitchen device
- 2: Whisk
- 3: Disconnecting means
- 4: Shaft
- 5: Processing bowl
- 6: Housing
- 7: Slider
- 8: Edge of disconnecting means
- 9: Driving means
- 10: Kitchen device

## Claims

1. A tool (1) for a kitchen device (10) having a shaft (4) to be removably connected to the driving means (9) of the kitchen device (10) with a user actuatable disconnecting means (3) adapted to disconnect the tool (1) through a direct user interaction from the drive unit (8) of the kitchen device (10), **characterized in that** the disconnecting means (3) is irremovably attached to the tool (1) wherein the force with which the disconnecting means (3) is adapted to disconnect the tool (1) from the driving means (9) is transferred by contacting the inner portion of the disconnecting means (3) with a slider (7), mounted on the shaft (4) between the housing (6) of the kitchen device (10) and the disconnecting means (3).

2. The tool (1) according to claim 1, **characterized in that** the disconnecting means (3) has a concave shape at least on the side adjacent to the housing (6) of the kitchen device.

3. The tool (1) according to claim 1 or 2, **characterized in that** the disconnecting means (3) is mounted to the shaft (4) in a tiltable manner in order to exert a force needed to disconnect the tool (1) from the driving means(9).

4. The tool (1) according to any of the previous claims, **characterized in that** the disconnecting means (3) also serves as a handling means to allow the user to handle and remove the tool (1).

5. The tool (1) according to any of the previous claims, **characterized in that** disconnecting means (3) is adapted so that the force needed to disconnect the tool (1) from the driving means (9) is lower than 25 N, preferably lower than 10 N and even more preferably lower than 5 N.

6. The tool (1) according to any of the previous claims, **characterized in that** the tool (1) is adapted so as to substantially cover the contact area between the shaft (4) of the tool (1) and the driving means (9) of the kitchen device (10)

7. The tool (1) according to any of the previous claims, **characterized in that** the disconnecting means (3) is at least in part made of a non-metallic material, preferably rubber.

8. The tool (1) according to any of the previous claims, **characterized in that** the disconnecting means (3) is in form of a disc fixed to the axis of the tool (1).

9. The tool (1) according to any of the claims 1 to7, **characterized in that** the disconnecting means (3) is in form of a rod fixed to the axis of the tool that extends radially in at least two symmetrical directions to facilitate manual engagement.

10. A motorized kitchen appliance (10) comprising a tool (1) according to any of the previous claims.

## Patentansprüche

1. Werkzeug (1) für ein Küchengerät (10) mit einer Welle (4), die abnehmbar mit dem Antriebsmittel (9) des Küchengeräts (10) verbunden werden soll, wobei ein vom Benutzer betätigbares Trennmittel (3) so ausgelegt ist, dass es das Werkzeug (1) über eine direkte Benutzereinwirkung von der Antriebseinheit (8) des Küchengeräts (10) trennt, **dadurch gekennzeichnet, dass** das Trennmittel (3) fest an dem Werkzeug (1) angebracht ist, wobei die Kraft, mit der das Trennmittel (3) das Werkzeug (1) von dem Antriebsmittel (9) trennt, durch den Kontakt des inneren Abschnitts des Trennmittels (3) mit einem Schieber (7) übertragen wird, der zwischen dem Gehäuse (6) des Küchengeräts (10) und dem Trennmittel (3) an die Welle (4) montiert ist.

2. Werkzeug (1) nach Anspruch 1, **dadurch gekennzeichnet, dass** das Trennmittel (3) zumindest auf der an das Gehäuse (6) des Küchengeräts angrenzenden Seite eine konkave Form aufweist.

3. Werkzeug (1) nach Anspruch 1 oder 2, **dadurch gekennzeichnet, dass** das Trennmittel (3) auf kippbare Weise an die Welle (4) montiert ist, so dass eine Kraft ausgeübt werden kann, die zum Trennen des Werkzeugs (1) von dem Antriebsmittel (9) erforderlich ist.

4. Werkzeug (1) nach einem der vorhergehenden Ansprüche, **dadurch gekennzeichnet, dass** das Trennmittel (3) auch als Handhabungsmittel dient, das es dem Benutzer ermöglicht, das Werkzeug (1) zu handhaben und abzunehmen.

5. Werkzeug (1) nach einem der vorhergehenden Ansprüche, **dadurch gekennzeichnet, dass** das Trennmittel (3) so ausgelegt ist, dass die zum Trennen des Werkzeugs (1) von dem Antriebsmittel (9) erforderliche Kraft weniger als 25 N, vorzugsweise weniger als 10N und besonders bevorzugt weniger als 5 N beträgt.

6. Werkzeug (1) nach einem der vorhergehenden Ansprüche, **dadurch gekennzeichnet, dass** das Werkzeug (1) so ausgelegt ist, dass es im Wesentlichen die Kontaktfläche zwischen der Welle (4) des Werkzeugs (1) und dem Antriebsmittel (9) des Küchengeräts (10) abdeckt.

7. Werkzeug (1) nach einem der vorhergehenden Ansprüche, **dadurch gekennzeichnet, dass** das Trennmittel (3) zumindest teilweise aus einem nichtmetallischen Material, vorzugsweise Gummi, hergestellt ist.

8. Werkzeug (1) nach einem der vorhergehenden Ansprüche, **dadurch gekennzeichnet, dass** das Trennmittel (3) die Form einer Scheibe aufweist, die an der Achse des Werkzeugs (1) fixiert ist.

9. Werkzeug (1) nach einem der Ansprüche 1 bis 7, **dadurch gekennzeichnet, dass** das Trennmittel (3) die Form eines Stabs aufweist, der an der Achse des Werkzeugs fixiert ist und radial in mindestens zwei symmetrische Richtungen verläuft und so ein Anfassen mit der Hand ermöglicht.

10. Motorisiertes Küchengerät (10) mit einem Werkzeug (1) nach einem der vorhergehenden Ansprüche.

## Revendications

1. Outil (1) destiné à un dispositif de cuisine (10) comportant un arbre (4) à relier de manière amovible au moyen d'entraînement (9) du dispositif de cuisine (10) à l'aide d'un moyen de séparation actionnable par l'utilisateur (3) conçu pour séparer l'outil (1) au moyen d'une interaction directe d'utilisateur à partir de l'unité d'entraînement (8) du dispositif de cuisine (10), **caractérisé en ce que** le moyen de séparation (3) est fixé à demeure à l'outil (1), dans lequel la force avec laquelle le moyen de séparation (3) est conçu pour séparer l'outil (1) du moyen d'entraînement (9) est transférée par mise en contact de la partie intérieure du moyen de séparation (3) avec un curseur (7) monté sur l'arbre (4) entre le logement (6) du dispositif de cuisine (10) et le moyen de séparation (3).

2. Outil (1) selon la revendication 1, **caractérisé en ce que** le moyen de séparation (3) est de forme concave au moins du côté adjacent au logement (6) du dispositif de cuisine.

3. Outil (1) selon la revendication 1 ou 2, **caractérisé en ce que** le moyen de séparation (3) est monté sur l'arbre (4) de manière à pouvoir osciller afin d'exercer une force nécessaire pour séparer l'outil (1) du moyen d'entraînement (9).

4. Outil (1) selon l'une quelconque des revendications précédentes, **caractérisé en ce que** le moyen de séparation (3) sert également de moyen de manipulation pour permettre à l'utilisateur de manipuler et de retirer l'outil (1).

5. Outil (1) selon l'une quelconque des revendications précédentes, **caractérisé en ce que** le moyen de séparation (3) est conçu de telle sorte que la force nécessaire pour séparer l'outil (1) du moyen d'entraînement (9) est inférieure à 25 N, de préférence inférieure à 10 N et de préférence encore inférieure à 5 N.

6. Outil (1) selon l'une quelconque des revendications précédentes, **caractérisé en ce que** l'outil (1) est conçu de manière à recouvrir sensiblement l'aire de contact entre l'arbre (4) de l'outil (1) et le moyen d'entraînement (9) du dispositif de cuisine (10).

7. Outil (1) selon l'une quelconque des revendications précédentes, **caractérisé en ce que** le moyen de séparation (3) est au moins en partie constitué d'un matériau non métallique, de préférence du caoutchouc.

8. Outil (1) selon l'une quelconque des revendications précédentes, **caractérisé en ce que** le moyen de séparation (3) se présente sous la forme d'un disque fixé à l'axe de l'outil (1).

9. Outil (1) selon l'une quelconque des revendications 1 à 7, **caractérisé en ce que** le moyen de séparation (3) se présente sous la forme d'une tige fixée à l'axe de l'outil qui s'étend radialement dans au moins deux directions symétriques pour faciliter l'enclenchement manuel.

10. Appareil de cuisine motorisé (10) comprenant un outil (1) selon l'une quelconque des revendications précédentes.
